(19) Europäisches Patentamt
European Patent Office
Office européen des brevets

(11) Publication number: 0 281 213
A2

(12) EUROPEAN PATENT APPLICATION

(21) Application number: 88200424.5

(22) Date of filing: 04.03.88

(51) Int. Cl.4: C08G 59/14 , C08G 59/18 , C08G 59/62 , C09D 3/58

(30) Priority: 06.03.87 GB 8705264

(43) Date of publication of application: 07.09.88 Bulletin 88/36

(84) Designated Contracting States: AT BE CH DE ES FR GB GR IT LI LU NL SE

(71) Applicant: SHELL INTERNATIONALE RESEARCH MAATSCHAPPIJ B.V.
Carel van Bylandtlaan 30
NL-2596 HR Den Haag(NL)

(72) Inventor: Scholten, Henricus Paulus Hubertus
Kantersteen 47
B-1000 Brussels(BE)
Inventor: Dijkstra, Tette Jan
Kantersteen 47
B-1000 Brussels(BE)
Inventor: Kooymans, Petrus Gerardus
Kantersteen 47
B-1000 Brussels(BE)
Inventor: Van Iperen, Roeland
Kantersteen 47
B-1000 Brussels(BE)

(74) Representative: Aalbers, Onno et al
P.O. Box 302
NL-2501 CH The Hague(NL)

# (54) Process for the preparation of a modified epoxy resin.

(57) A process for the preparation of a primary hydroxyl group containing epoxy resin having from 1.5 to 2.5 epoxy groups per molecule by reacting at a temperature of from 100 to 235 °C in the presence of an etherification catalyst

a) an epoxy resin having more than 1.5 and at most 2 epoxy groups per molecule and an epoxy group concentration (EGC) of from 1 to 7 $eq.kg^{-1}$ with

b) an aliphatic trihydric primary alcohol having from 5 to 12 carbon atoms, under the proviso that the ratio (R) of epoxy equivalents of reactant a) to hydroxyl equivalents of reactant b) is selected within the range of from (1.2-0.11 EGC) to (1.3+0.12 EGC).

EP 0 281 213 A2

## PROCESS FOR THE PREPARATION OF A MODIFIED EPOXY RESIN

This invention relates to a process for the preparation of a modified epoxy resin that contains on average at least one primary hydroxyl group and from 1.5 to 2.5 epoxy groups per molecule. This process comprises the etherification of an epoxy resin with more than 1.5 and less than 2 epoxy groups per molecule by reaction with an aliphatic alcohol having three primary hydroxyl groups. Next to the number of epoxy groups per molecule a further restricting feature of the epoxy resins to be reacted in the process of this invention is the selection of an epoxy group concentration between the limiting values of 1 to 7 $eq.kg^{-1}$. The term "Epoxy group concentration" (EGC) as used in this specification is determined in accordance with the equation

$$EGC = \frac{10^3}{EE} \ eq.kg^{-1}$$

in which EE is epoxy equivalent weight, in $g.eq^{-1}$, calculated in accordance with the ISO standard method 3001-1978(E).

Etherification of polyfunctional epoxy resins with aliphatic alcohols containing primary hydroxyl groups and having a functionality larger than 2 is known per se from the prior art. One of the problems associated with this reaction is to avoid the formation of hard, infusible reaction products, hereinafter referred to as "gels". Such gels serve no useful purpose, they cannot be used for casting or surface coating compositions since further processing by incorporating curing agents, curing resins, or curing compositions is impossible. Next to the problem of gel formation it is observed that to date no process is known for etherifying epoxy resins with trifunctional aliphatic primary alcohols that would lead to valuable products which can be employed as ambient temperature cure surface coatings which, when cured, show attractive flow, blooming and gloss properties.

The present invention aims at providing an attractive solution to the technical problems that have been touched upon in the preceding paragraph. To this end the invention provides a process for the preparation of a modified epoxy resin that contains on average from 1.5 to 2.5 epoxy groups and at least one primary hydroxyl group per molecule by reacting at a temperature of from 100 to 235 °C in the presence of an etherification catalyst

a) an epoxy resin having more than 1.5 and at most 2 epoxy groups per molecule and an epoxy group concentration (EGC) of from 1 to 7 $eq.kg^{-1}$ with

b) an aliphatic trihydric primary alcohol having from 5 to 12 carbon atoms, under the proviso that the ratio (R) of epoxy equivalents of reactant a) to hydroxyl equivalents of reactant b) is selected within the range of from (1.2-0.11 EGC) to (1.3+0.12 EGC).

The aliphatic primary trihydric alcohol to be reacted in the process of the invention comprises three primary hydroxyl groups and preferably no other (secondary or tertiary) hydroxyl groups. Suitable compounds are
1,1,1-tri(hydroxymethyl)propane, 1,1,2-tri(hydroxymethyl)propane,
1,2,3-tri(hydroxymethyl)propane, 1,1,3-tri(hydroxymethyl)propane,
1,1,1-tri(hydroxymethyl)ethane, 1,1,2-tri(hydroxymethyl)ethane,
1,1,1-tri(hydroxymethyl)butane, 1,1,3-tri(hydroxymethyl)butane,
1,3,4-tri(hydroxymethyl)butane, 2,2,3-tri(hydroxymethyl)butane,
1,1,1-tri(hydroxymethyl)pentane, 1,1,1-tri(hydroxymethyl)hexane,
1,2,3-tri(hydroxymethyl)heptane, 1,2,5-tri(hydroxymethyl)octane,
2,2,4-tri(hydroxymethyl)nonane, 1,1,1-tri(hydroxymethyl)nonane or
1-hydroxy, 3-oxa-5,5'-di(hydroxymethyl)heptane.

Preferred alcohols are those that can be employed as a liquid phase under the reaction temperature at which the process of this invention is carried out. Very suitable alcohols are 1,1,1-tri(hydroxymethyl) substituted alkanes. The most preferred alcohol is 1,1,1-tri(hydroxymethyl)propane melting at 58 °C and being a solvent for the relevant epoxy resin to be reacted, thus significantly simplifying the preparation of the modified epoxy resin.

Suitable examples of epoxy resins to be employed as reactant a) are reaction products of a multifunctional polyglycidyl ether having on average x epoxy groups per molecule, where x > 2, with (x-n)

mol of a monofunctional phenol per mol of the multifunctional polyglycidyl ether, as described in European patent application No. 0 0127 915. Other suitable reactants a) are glycidyl ethers of dihydric phenols, preferably 2,2-bis-(4-hydroxyphenyl)propane, commercial products of this type are known as EPIKOTE 825, 828, 1001, 1055 or 3003. Another suitable EPIKOTE grade is EPIKOTE 862. Preferred resins are those having an epoxy group concentration of from 1.25 to 5.2 $eq.kg^{-1}$.

Examples of etherification catalysts are amines and Lewis acids, for example alkanoates and halides of iron, zinc, aluminium and boron, and alkali metal alcoholates of polyoxyalkylene polyols. According to a preferred embodiment of the present invention a stannous salt, e.g. stannous dichloride, is used as an etherification catalyst. The stannous salt is preferably a salt of an alkanoic acid, particularly of those having in the range of from 2 to 30 carbon atoms per molecule. Preferred catalysts are stannous salts of an alkanoic acid, preferably having of from 2 to 20 carbon atoms, e.g. stannous-octoate.

Owing to the selection of relatively low temperatures the risk of gel-formation during the etherification of the epoxy resins is significantly reduced. This is even more so when the temperature is selected within the preferred range of from 140 to 185 °C. Under these mild reaction conditions monitoring of epoxy group conversion and of primary hydroxyl group conversion can be carried out using standard titration methods or $^1$H-NMR. As stated hereinabove both epoxy group conversion and primary hydroxyl group conversion should be incomplete, for the epoxy groups the percentage conversion is preferably kept within the range of from 35 to 80%, for the primary hydroxyl groups the conversion is preferably kept within the range of from 60 to 85%.

Another critical factor for avoiding gel-formation during the etherification process is the selection of the right ratio (R) of epoxy equivalents to hydroxyl equivalents in the respective reactants a) and b), respectively epoxy resin and aliphatic trihydric primary alcohol. R should be at least (1.2-0.11 EGC) and at most (1.3 + 0.12 EGC). The preferred limiting values are (1.25-0.10 EGC) and (1.25 + 0.12 EGC).

The modified epoxy resins produced in accordance with the process of this invention will as a rule comprise components that are linear products or branched products which by way of example may be considered to be generally represented by the following schematic formulae:

$$E-(T-E)_n-T-E_m \qquad (i)$$

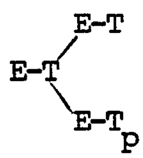

(ii)

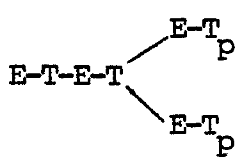

(iii)

in which m is 0 or 1, preferably 1, n is 0, 1, 2, 3 or higher, p is 0 or 1, preferably 0, T stands for the aliphatic triol moiety, E stands for the epoxy resin moiety and the links - between E and T are groups $-\overset{OH}{\overset{|}{C}}-C-O-$ resulting from the etherification of the 1,2-epoxy group of E with the primary hydroxyl group of T. It will be clear that products (i) are linear and that products (ii) and (iii) are branched. Further it will be clear that when m is 1, the relevant component will comprise two unreacted 1,2-epoxy end-groups and that when p is 1, the relevant components (ii) or (iii) will comprise converted triol groups with two primary hydroxyl groups resulting from the etherification of only one of the three primary hydroxyl groups of reactant b. The component with the lowest possible molecular weight present in the reaction products of the process of this invention is E-T, the first heavier component is E-T-E, and so on. Single components cannot be obtained, hence the reaction products of the process of this invention is usually a mixture of a number of different compounds of all formulae (i), (ii) and (iii), it being understood that to obtain the benefits of this invention it is essential that the reaction products contain on average at least 1.5 unconverted 1,2-epoxy groups per molecule and at least 1.0 unconverted primary hydroxyl groups. The latter will usually be present in one of the symbols T somewhere in the middle of the molecule chains represented in (i), (ii), or (iii) above. In addition to the molecules schematically represented hereinabove, higher branched products,

i.e. having more than one branching position, can also be present in the modified epoxy resins made in accordance with the process of this invention.

The relevant modified epoxy resins are eminently suitable for applications based on the use of ambient temperature curing systems. Attractive curing systems in this respect include amines, reactive isocyanates and thiols.

Suitable amine curing agents are those having more than two amino-hydrogen groups per molecule. The amine may be an aliphatic, cycloaliphatic or aromatic primary polyamine or it may be a reaction product of such a polyamine with an epoxide or with a phenol aldehyde resin. Examples of suitable such polyamines are ethylene diamine, diethylene triamine, triethylene tetramine, cyclohexylpropylene diamine, diaminocylcohexyl methane, dimethyldiaminodicyclohexyl methane, isophoronediamine (i.e. 3,5,5-trimethyl-3-aminomethylcyclohexyl amine), xylylene diamine (i.e. di(aminomethyl)benzene), diaminodiphenyl methane or diaminodiphenyl sulphone. The amine is preferably a polyamine per se, or less preferred the reaction product of a polyamine with a low viscosity monoglycidyl reactive diluent. Triethylene tetramine, cyclohexylpropylene diamine, dimethyldiaminodicyclohexyl methane and the adduct of diaminodiphenyl methane with n-butylglycidyl ether have been found to be very suitable amines for ambient temperature cure application. Where necessary, the amine may contain up to 30 %wt of one or more non-reactive diluents and/or curing accelerators such as dibutyl phthalate, benzyl alcohol, phenol, cresols, xylenols or salicylic acid.

The relative proportions of modified epoxy resin and amine curing agent are those generally employed in the curable binder art, typically from 0.8 to 1.2 amino-hydrogen equivalent per epoxy equivalent.

The present invention is however not restricted to use of ambient temperature curing systems, high temperature curing may be employed as well. Examples of the latter curing systems, e.g. for stoving lacquers, powder coatings, electrodeposition coatings, are phenol-formaldehyde resins, bisphenolic curing agents, aminoplast resins, anhydride curing agents, polycarboxylic compounds and dicyandiamide.

The modified epoxy resins of this invention are primarily intended to be employed in surface coatings. Other applications are also possible. The resins may be blended with conventional solvents such as aliphatic or aromatic hydrocarbons. Pigments, fillers, dispersing agents and other components known in the art of surface coating formulations may be added to the curable resin systems comprising modified epoxy resins made in accordance with the process of this invention.

## EXAMPLES

a) EPIKOTE resin and aliphatic triol are charged to a suitable glass reactor equipped with anchor stirrer, reflux condenser and thermocouple. The ingredients are heated with appropriate agitation to 100 °C and catalyst stannous octoate is added. Then, the temperature is increased to the desired reaction temperature. The course of the reaction is followed by withdrawing samples at regular intervals and determining the EGC value.

When the desired EGC is reached, the reaction is stopped by rapid cooling. In runs 3, 4 and 5 the reaction was continued to determine the moment at which gel formation occurs. The epoxy resin reacted in runs 1 to 6 and 8 was EPIKOTE 828, in run 7 EPIKOTE 1001 and in run 9 EPIKOTE 3003. The triol reacted in runs 1 to 5 and 7 to 9 was 1,1,1-tri(hydroxymethyl)propane. In run 6 the triol was 1,1,1-tri-(hydroxymethyl)ethane.

TABLE I

| Run | Resin (g) | Resin (eq) | Triol (g) | Triol (eq) | Catalyst (g) | Catalyst (%w) | Reaction temp. (°C) | Reaction time period (h) | Reaction time to gel (h) | Final EGC ($eq.kg^{-1}$) |
|---|---|---|---|---|---|---|---|---|---|---|
| 1 | 372 | 2.0 | 67.1 | 1.5 | 1.1 | 0.25 | 170 | 7.5 | | 2.24 |
| 2 | 744 | 4.0 | 134.2 | 3.0 | 4.38 | 0.5 | 160 | 6.0 | | 2.22 |
| 3* | 372 | 2.0 | 67.1 | 1.5 | 1.1 | 0.25 | 180 | 6.5 | 14 | |
| 4* | 372 | 2.0 | 67.1 | 1.5 | 1.1 | 0.25 | 190 | 4.5 | 8 | |
| 5* | 372 | 2.0 | 67.1 | 1.5 | 1.1 | 0.25 | 200 | 2.5 | 5.5 | |
| 6 | 372 | 2.0 | 60.0 | 1.5 | 2.15 | 0.5 | 170 | 6.0 | | 2.31 |
| 7 | 1133 | 2.4 | 80.5 | 1.8 | 6.07 | 0.5 | 170 | 2.0 | | 0.98 |
| 8 | 1116 | 6.0 | 268.4 | 6.0 | 3.45 | 0.25 | 170 | 8.0 | | 1.44 |
| 9 | 3076 | 4.0 | 134.2 | 3.0 | 8.03 | 0.25 | 175 | 6.0 | | 0.61 |

* for comparison

b) The reaction product of run 1 was evaluated in ambient temperature cure surface coatings systems. Tables II and III list the performance in various test methods. Particular attention is drawn to the attractive blooming and gloss properties. The product of run 1 was compared with standard EPIKOTE 1001 resin, marked "S" in Table II. For the preparation of the surface coatings each of the resins was dissolved (50 %wt solids) in a 3:1:1 molar mixture of xylene, 1-hydroxybutane and 2-butanone. The solutions were

mixed with diethylene triamine (DTA), allowed to age and applied onto steel panels to yield a film thickness of 30-35.$10^{-6}$m.

TABLE II

| | Run 1 product | | "S" | |
|---|---|---|---|---|
| DTA (phr) | 4.71 | | 4.45 | |
| Ageing at 23 °C, min | 10 | 40 | 10 | 40 |
| 7 days cure at 23 °C | | | | |
| Film appearance | Blooming | | Severe Blooming | |
| Buchholz hardness | 69 | 69 | 100 | 91 |
| Erichsen slow penetration, $10^{-3}$m | 7 | | 3 | |
| Double rubs, 2-butanon | >100 | >100 | >100 | >100 |
| | | | | |
| 10 days cure at 10 °C | | | | |
| Double rubs, 2-butanone | 100 | | 30-40 | |

The product of run 7 was compared with standard EPIKOTE 1003, marked "T" in Table III, the formulation is known per se

TABLE III

| | | Run 7 product | "T" |
|---|---|---|---|
| Resin, g | | 637 | 728 |
| EPIKOTE 3003 4F 10, g | | 70 | 80 |
| $TiO_2$, g | | 350 | 400 |
| Epikure 147, g | | 28 | 38 |
| Gel time (sec) at | | | |
| | 180 °C | 130 | 180 |
| | 160 °C | 230 | 490 |

Film properties of $55.10^{-6}$m films after stoving at 180 °C for 10 min:

| | | | |
|---|---|---|---|
| Appearance | | Good | Fair |
| Gloss | 60 ° | 103 | 101 |
| | 20 ° | 95 | 87 |
| Whiteness | | 89 | 87 |
| Erichsen slow | | | |
| penetration ($10^{-3}$m) | | >8 | >8 |
| Gardner Impact | | | |
| (inch-lbs) | Reverse | 100 | 160 |
| | Direct | 120 | 140 |

**Claims**

1. A process for the preparation of a modified epoxy resin that contains on average from 1.5 to 2.5 epoxy groups and at least one primary hydroxyl group per molecule by reacting at a temperature of from 100 to 235 °C in the presence of an etherification catalyst

a) an epoxy resin having more than 1.5 and at most 2 epoxy groups per molecule and an epoxy group concentration (EGC) of from 1 to 7 eq.$kg^{-1}$ with

b) an aliphatic trihydric primary alcohol having from 5 to 12 carbon atoms, under the proviso that the ratio (R) of epoxy equivalents of reactant a) to hydroxyl equivalents of reactant b) is selected within the range of from (1.2-0.11 EGC) to (1.3+0.12 EGC).

2. A process as claimed in claim 1, in which the epoxy resin with from 1.5 to 2 epoxy groups per molecule is a diglycidyl ether of a dihydric phenol.

3. A process as claimed in claim 1 or 2, in which the aliphatic triol is a trimethylolpropane.

4. A process as claimed in any one of claims 1 to 3, in which the epoxy group conversion is kept within the range of from 35 to 80%, and the primary hydroxyl group conversion is kept within the range of from 65 to 85%.

5. A process as claimed in any one of claims 1 to 4, in which the reaction temperature is from 140 to 185 °C.

6. A epoxy resin surface coating composition, in which the epoxy resin is a modified epoxy resin made with a process as claimed in any one of claims 1 to 5.

7. A surface coating composition as claimed in claim 6 comprising a curing agent.